# EUROPEAN PATENT APPLICATION

(11) **EP 3 287 227 A1**
(43) Date of publication of application: **28.02.2018**
(21) Application number: 17187073.6
(22) Date of filing: 21.08.2017
(51) Int. Cl.: B23K 35/02, B21C 1/00, D07B 1/00, B23K 35/40

(54) **STAINLESS STEEL AUGER BRAID WELDING MATERIAL AND ITS MANUFACTURING METHOD**

(30) Priority: 26.08.2016 CN 201610741866
(71) Applicant: Wuhan Runzhida Petrochemical Equipment Co., Ltd., Wuhan Hubei (CN)
(72) Inventor: The designation of the inventor has not yet been filed
(74) Representative: Hellmich, Wolfgang

(57) **Abstract**

A kind of stainless steel auger braid welding material and its manufacturing method are disclosed in the invention, involving the field of welding technique. The stainless steel auger braid welding material consists of core wires and several steel tendons, wherein the said welding wire is of a round-bar shape; the said steel tendons are wrapped on the external surface of the said core wire along the axial line and stranded around the circumference of the said core wire, and each steel tendon shall be stranded by winding several fine wires. For the stainless steel auger braid welding material adopted in the invention, its melting rate is fast.

## Description

### FIELD OF THE INVENTION

The present invention relates to the field of welding technique, particularly to the stainless steel auger braid welding material and its manufacturing method.

### BACKGROUND OF THE INVENTION

The stainless steel welding is characterized by a high efficiency of welding, but the existing welding material is of single large-diameter welding wire which can be used for welding with large welding parameters, while such large welding parameters must lead to a great amount of welding heat input and further large welding deformation. Another disadvantage of such large heat input is that the width of heat affected zone (HAZ) is too large, which will cause stress corrosion or inter-crystalline corrosion failure of welding joint with the action of welding stress and corrosion medium, so as to reduce the service life of equipment.

Furthermore, the physical property of stainless steel is characterized in that the thermal conductivity factor is low and the amount of thermal expansion is large During the process of welding, the thermal expansion of the metal in the melting bath first occurs, and then contraction starts again during the process of cooling, contributing to a large heat impact and certain shrinkage stress on the base metal side of weld metal. The thicker the plate is, the more obvious the shrinkage stress is. Generally, stress corrosion failure and inter-crystalline corrosion failure originate mostly from the HAZ of base metal and then expands in the shape of branch. The reason why the HAZ is not the zone seriously affected by stainless steel corrosion failure is that the amount of welding heat input is too large. In the process of thermal cycle, the increase in the grain size of the HAZ of any metal will vary; with an increased amount of welding heat input, the width of the HAZ of base metal will be increased, which leads to an increase in damages to equipment.

In terms of the welding of single large-diameter welding wires, the welding efficiency is in direct proportion to the diameter of welding wires. The higher the welding efficiency is, the thicker the diameter of welding wire is. However, after the diameter of welding wire is increased, the amount of welding heat input must be increased. Otherwise, it cannot be melted. With the increase in welding heat input the harmful impact on the HAZ of base metal will be enhanced accordingly. Consequently, according to the conventional thinking of technology, the diameter of welding wire must be reduced in order to get an extremely small amount of welding heat input. But such reduction in the diameter of welding wire will greatly lower the welding efficiency, resulting in failure in resolving their conflicts.

Previously, intertwined steel cable wires for gas shielded welding were developed in China (see the Narrow-Gap Gas Shielded Welding with Intertwined Wires of the Electric Welding Machine (No. 02, 1986)). But it could not be effectively promoted due to the following defects: the rigidity of steel cables is very bad; the stability is poor at the time of automatic wire feed; the steel cables twist and swing in case of melting at a high temperature, which result in instable electric arcs, different width of weld joints and poor-quality molding, undercuts and lack of fusion of side walls, etc. Moreover, if the steel-cable intertwined wires are used in welding, its stability will be worse, so no successful cases or documents are available.

Therefore, when the existing stainless steel welding material is welded, the amount of heat input will be relatively large, so that the metal toughness of welds will deteriorate and the welding deformation will be increased. Problems, such as stress corrosion sensitivity, shall be urgently solved and improved.

### SUMMARY OF THE INVENTION

The invention is intended to provide one kind of stainless steel auger braid welding material and its manufacturing method, which can provide several kinds of welding materials for stainless steel submerged arc welding, argon arc welding and gas shielding welding. By using these materials, at the time of welding, the amount of heat input is low, the welding deformation is small; at the time of wire feed, the stability is good and the welding efficiency is high. Simple in structure and relatively low in cost, these materials can be promoted and applied extensively.

To achieve the aforementioned objectives, the invention provides the following technical schemes:
One kind of stainless steel auger braid welding material consists of core wire and several steel tendons, wherein
the said welding wire is of a round-bar shape;
the said steel tendons are wrapped on the external surface of the said core wire along the axial line, and stranded around the circumference of the said core wire, and each steel tendon shall be stranded by winding several fine wires.

Furthermore, the number of the said steel tendons is 5-20, each of which contains 3-15 fine wires.

Furthermore, the diameter of the said core wires is 1/4-1/2 of the overall diameter of welding material.

Furthermore, the said core wire is made of stainless steel bundle wire.

Furthermore, the diameter of the said fine wires is 0.05∼0.8mm.

The invention also provides the manufacturing method of a kind of stainless steel auger braid welding material, including the following steps:
Step 1 Fabrication of fine wires: The billet is made of stainless steel bundle wire which will be drawn many times, and after such drawing is completed, annealing will be performed to get fine wires;
Step 2 Fabrication of steel tendons: The fine wires obtained in Step 1 will be stranded with a stranding machine and the high-heat treatment of on-line removal of grease will be performed after such stranding is finished;
Step 3 Fabrication of core wires: The billet is made of stainless steel bundle wire which will be drawn many times, and after such drawing is completed, annealing will be performed to get core wires;
Step 4 Fabrication of stainless steel auger braid welding material: The steel tendons obtained in Step 2 will be uniformly covered on the external surface of core wire produced in Step 3 and a stranding machine will be adopted to strand the aforementioned steel tendons around the circumference of core wire, and after such stranding is completed, the high-heat treatment is carried out for grease removal to get the said stainless steel auger braid welding material.

Furthermore, the temperature of annealing for fine wires is 600∼1200°C in Step 1. During heat treatment, the furnace is filled with protective gas and a duration of heat treatment is 2-4 Min.

Furthermore, the temperature of high-heat treatment for on-line removal of grease from steel tendons is 600∼1200°C in Step 2. During heat treatment, the furnace is filled with protective gas and a duration of heat treatment is 2-4 Min.

Furthermore, the temperature of annealing for core wires is 600∼1200°C in Step 3. During heat treatment, the furnace is filled with protective gas and a duration of heat treatment is 2-4 Min.

Furthermore, the manufacturing method of the stainless steel auger braid welding material described in Claim 6 is characterized in that the temperature of high-heat treatment for on-line removal of grease from the stainless steel auger braid welding material obtained is between 600°C and 1200°C in Step 4.During heat treatment, the furnace is filled with protective gas and a duration of heat treatment is 2-4 Min. After the heat treatment is completed, discharging and water cooling are performed, and after water cooling is finished, the drying furnace is employed for drying at a temperature of 100∼300°C.

For the stainless steel auger braid welding material adopted in the invention, its melting rate is fast. Compared with the traditional solid-core welding material, such material is characterized in that a very high welding current is not required, the consumption of power and energy is saved, the amount of heat input is low, the harmful impact on the HAZ of base metal is minor, the welding deformation is small, the stability is good at the time of wire feed, the welding efficiency is high, the quality is high and the molding is beautiful.

### BRIEF DESCRIPTION OF THE DRAWINGS

To clearly illustrate the detailed description of the preferred embodiments of the invention or the technical scheme in the prior art, the accompanying drawings to be used in the detailed description of the preferred embodiments of the invention or the technical scheme in the prior art will be briefly introduced hereunder. Obviously, the accompanying drawings described hereunder are a part of preferred embodiments of the invention, and for the ordinary technicians in this field, they can get other accompanying drawings according to the aforesaid accompanying drawings on the premise that no creative efforts are made.
Fig. 1 is a schematic view of the welding material of stainless steel auger braid submerged arc welding in Embodiment 1;
Fig. 2 is a schematic view of the welding material of stainless steel auger braid gas shielded welding in Embodiment 2.

### DETAILED DESCRIPTION OF THE PREFERRED EMBODIMENTS

Combined with the accompanying drawings, the technical scheme of the invention will be described clearly and completely hereunder. Obviously, the embodiments described are a part of, not all of, embodiments in the invention. Based on the embodiments in the invention, any other embodiments obtained by the ordinary technicians in this field without creative efforts belong to the scope of protection of the invention.

It is important to note that the terms indicating position relations in the description of the invention, e.g. "central", "up", "down", "left", "right", "vertical", "horizontal", "inside" and "outside", refer to the position relations shown in the accompanying drawings, all of which are used to describe the invention and simplify such description only, not indicating or implying that the apparatus or component mentioned must have its specific position, and must be structured and operated in such specific position, so it can in no way be construed as the limitation on the invention. Besides, the terms, i.e. "firstly", "secondly" and "thirdly", are used to describe objective only, and cannot be construed as relative importance of an indication or implication.

It is important to note that the terms in the description of the invention, i.e. "installation", "connect" and "connection" shall be understood in a broad sense, e.g. fixed connection, detachable connection or integrated connection; mechanical connection or electrical connection; direct connection or indirect connection via a medium or internal connection of two components, unless otherwise expressly specified and limited. For ordinary technicians in this field, it can be construed as the specific meaning of the aforementioned terms in the invention as the case may be. Combined with the accompanying drawings, the detailed description of the preferred embodiments of the invention will be elaborated hereunder. It should be understood that the detailed description of the preferred embodiments herein is used to introduce and explain the invention only, not to limit the invention.

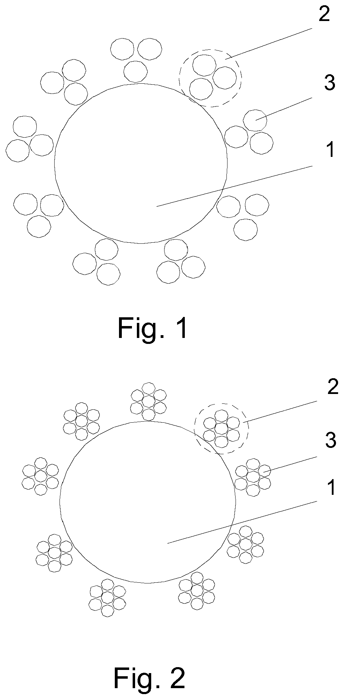

As shown in Fig. 1 and Fig. 2, the invention provides a kind of stainless steel auger braid welding material, including core wire 1 and several steel tendons 2.

Wherein, core wire 1 is of a round-bar shape and steel tendons 2 are wrapped on the external surface of core wire 1 along the axial line and stranded around the circumference of core wire 1, and each steel tendon 2 shall be stranded by winding several fine wires 3. The core wire is used for supporting and stabilization in the center, and the connection between the steel tendons and the core wire shall be manufactured by winding strands together, with the compact and stable structure and the uniform distribution.

In this scheme, the number of steel tendons 2 is 5-20, each of which is contains 3-15 fine wires 3.

In this scheme, the diameter of core wire 1 is 1/4-1/2 of the overall diameter of welding material. The solid core wire is designed on the central axis with an aim to ensure that the welding material is provided with a certain rigidity and stability during the process of welding, and to ensure that the deposited metal can travel stably in the process of welding, with a beautiful molding and the reliable quality.

On the basis that the aforementioned diameter requirements are met, the diameter of core wire is 1∼2.5mm in this scheme. The diameter of fine wire is 0.05∼0.8mm.

The invention also provides a manufacturing method of a kind of stainless steel auger braid welding material, including the following steps:
Step 1 Fabrication of fine wires 3: The billet is made of stainless steel bundle wire which will be drawn many times. After such drawing is completed, annealing will be performed to get fine wires. The billet used in this step adopts the stainless steel bundle wire with a diameter of 5∼20mm, which are made of ferrite stainless steel, Austentic stainless steel, ferrite + Austentic stainless steel, super Austenitic stainless steel or nickel-base stainless steel.
Step 2 Fabrication of steel tendons 2: The fine wires obtained in Step 1 will be stranded with a stranding machine and the high-heat treatment of on-line removal of grease will be performed after such stranding is completed.
Step 3 Fabrication of core wires 1: The billet is made of stainless steel bundle wires which will be drawn many times. After such drawing is completed, annealing will be performed to get core wires. The billet used in this step adopts the stainless steel bundle wires with a diameter of 5∼20mm, which are made of ferrite stainless steel, Austentic stainless steel, ferrite + Austentic stainless steel, super Austenitic stainless steel or nickel-base stainless steel.
Step 4 Fabrication of stainless steel auger braid welding material: The steel tendons obtained in Step 2 will be uniformly wrapped on the external surface of core wire produced in Step 3 and a stranding machine will be adopted to strand the aforementioned steel tendons around the circumference of core wire. After such stranding is completed, the high-heat treatment is carried out for grease removal to get the said stainless steel auger braid welding material. In this step, the high-heat treatment of on-line removal of grease is to burn the lubricating oil absorbed by the stainless steel bundle wires in the process of drawing and stranding, so as to ensure that the surface of finished products made of stainless steel auger braid welding material and the interior of steel tendons are free from any grease composition and to avoid any blow holes and slag inclusions at the time of welding.

In Step 1, the temperature of annealing for fine wires is 600∼1200°C in Step 1. During heat treatment, the furnace is filled with protective gas and a duration of heat treatment is 2-4 Min. In this step, one of nitrogen, argon, hydrogen and other gases will be selected as the protective gas to be filled.

In Step 2, the temperature of high-heat treatment for on-line removal of grease from steel tendons is 600∼1200°C in Step 2. During heat treatment, the furnace is filled with protective gas and a duration of heat treatment is 2-4 Min. In this step, one of nitrogen, argon, hydrogen and other gases will be selected as the protective gas to be filled.

In Step 3, the temperature of annealing for core wires is 6001200°C in Step 1. During heat treatment, the furnace is filled with protective gas and a duration of heat treatment is 2-4 Min. In this step, one of nitrogen, argon, hydrogen and other gases will be selected as the protective gas to be filled.

In Step 4, the manufacturing method of the stainless steel auger braid welding material described in Claim 6 is characterized in that the temperature of high-heat treatment for on-line removal of grease from the stainless steel auger braid welding material obtained is between 600°C and 1200°C in Step 4. During heat treatment, the furnace is filled with protective gas and a duration of heat treatment is 2-4 Min. After the heat treatment is completed, discharging and water cooling are performed. After water cooling is finished, the drying furnace is employed for drying at a temperature of 100∼300°C. In this step, one of nitrogen, argon, hydrogen and other gases will be selected as the protective gas to be filled.

The stainless steel auger braid welding material provided in this scheme is particularly suitable for butt welding of thick-plate stainless steel materials and buildup welding of carbon steel (or chromium-molybdenum steel) + stainless steel due to the increase in the speed of welding and the reduction in the amount of welding heat input. The stainless steel auger braid welding material with a diameter of 0.8∼2.0mm is suitable for manual welding, semi-automatic argon arc welding, semi-automatic gas shielded welding and robot-operated gas shielded welding. For the welding equipment of various welding methods, the stainless steel auger braid welding material provided in this scheme will not be improved or replaced, and can be directly used so as to save the cost of investment in equipment. At the time of welding, the welding flux used in the welding material is the same as that used by the traditional welding wire, and such welding flux is not selected or designed again, characterized by simplicity, continence and practicality. The stainless steel auger braid welding material and its manufacturing method provided in this scheme also can greatly support the welding of important equipment made of stainless steel, e.g. national defense equipment, nuclear power devices, power equipment and petrochemical equipment.

For the stainless steel auger braid welding material adopted in the invention, its melting rate is fast. Such material is characterized in that a very high welding current is not required, the consumption of power and energy is saved, the amount of heat input is low, the harmful impact on the HAZ of base metal is minor, the welding deformation is small, the stability is good at the time of wire feed, the welding efficiency is high, the quality is high and the molding is beautiful.

The stainless steel auger braid welding material described in this scheme can be used for a variety of welding modes, e.g. submerged arc welding, gas shielded welding and argon arc welding. The stainless steel auger braid welding material and its manufacturing method in the invention will be further explained hereunder through the embodiments of submerged arc welding and gas shielded welding.

### Embodiment 1: a kind of embodiment used for welding material of the submerged arc welding

As shown in Fig. 1, the diameter of the stainless steel auger braid submerged arc welding material is 4.0mm, and the diameter of core wire 1 is 2.0mm. 3 fine wires 3 are stranded into one steel tendon 2, and a total of 9 steel tendons 2 and core wire 1 are stranded into the stainless steel auger braid submerged arc welding material, with the following manufacturing steps:
1 Fabrication of fine wires 3: The stainless steel bundle wire with a diameter of 5.5mm is drawn many times until they are formed to fine wires with a diameter of 0.5mm. Then they are sent to the heat treatment furnace for annealing of automatic wire feed, with a heat treatment temperature of 800°C, and a duration of thermal-insulating heat treatment in furnace of 3 Min.
2 Fabrication of steel tendons 2: The fine wires obtained in Step 1 are stranded with a stranding machine, i.e. 3 fine wires are stranded into a steel tendon. After such stranding is finished, the high-heat treatment of on-line removal of grease is performed, with a heat treatment temperature of 800°C, and a duration of thermal-insulating heat treatment in furnace of 3 Min.
3 Fabrication of core wires 1: The stainless steel bundle wire with a diameter of 5.5mm is drawn many times until they are formed to single core wires with a diameter of 2.0mm. Then they are sent to the heat treatment furnace for on-line annealing at 1050°C, with a duration of thermal-insulating heat treatment in furnace of 3 Min.
4 Fabrication of stainless steel auger braid submerged arc welding material: A single core wire will be placed on the central shaft and a stranding machine will be used to uniformly distribute 9 steel tendons on the external surface of core wire in the axial direction. After such stranding is finished, the high-heat treatment will be conducted for grease removal at 800°C, with a duration of thermal insulation of 2 minutes. Then water cooling will be performed and drying will be conducted in a drying furnace at 200°C.

Comparison between the stainless steel auger braid submerged arc welding material and the existing welding wire:

The diameter of the stainless steel auger braid submerged arc welding material is 4.0 mm. Based on the same type of welding groove, the comparison between the welding process with the normal amount of heat inputs and the welding process of the existing submerged arc welding with the relatively low amount of heat inputs is shown as follows:

| Diameter of welding wire Ø4.0mm | Electric current (A) | Voltage (V) | Velocity of wire feed (cm/min) | Amount of heat inputs (KJ) |
|---|---|---|---|---|
| Existing submerged arc welding wire | 500 | 34 | 50 | 20.4 |
| Stainless steel auger braid submerged arc welding material | 400 | 32 | 65 | 11.8 |

Through comparison, the amount of welding heat input of the stainless steel auger braid submerged arc welding material is only about 58% of that of the existing submerged arc welding wire. Therefore, for the stainless steel auger braid submerged arc welding material provided in this embodiment, the amount of welding heat input is low at the time of welding, the harmful impact on the HAZ of base metal is small and the welding efficiency is high, with a good quality and a beautiful molding.

Given that the amount of heat input of the stainless steel auger braid welding material is extremely low and the diameter of its submerged arc welding material can be 6mm, the volume and efficiency of one-time filling of deposited metal will be increased.

### Embodiment 2: a kind of embodiment used for welding material of the gas shielded welding

As shown in Fig. 2, the diameter of the stainless steel auger braid gas shielded welding material is 2.0mm and the diameter of core wire 1 is 0.92mm. 7 fine wires 3 are stranded into one steel tendon 2, and a total of 9 steel tendons 2 and core wire 1 are stranded into the stainless steel auger braid as shielded welding material, with the following manufacturing steps:
1 Fabrication of fine wires 3: The stainless steel bundle wire with a diameter of 5.5mm is drawn many times until they are formed to fine wires with a diameter of 0.18mm. Then they are sent to the heat treatment furnace for annealing of automatic wire feed, with a heat treatment temperature of 800°C and a duration of thermal-insulating heat treatment in furnace of 2 Min.
2 Fabrication of steel tendons 2: The fine wires obtained in Step 1 are stranded with a stranding machine, i.e. 7 fine wires are stranded into a steel tendon. After such stranding is finished, the high-heat treatment of on-line removal of grease is performed, with a heat treatment temperature of 800°C and a duration of thermal-insulating heat treatment in furnace of 3 Min.
3 Fabrication of core wires 1: The stainless steel bundle wire with a diameter of 5.5mm are drawn many times until they are formed to single core wires a the diameter of 0.92mm. Then they are sent to the heat treatment furnace for on-line annealing at 1050°C, with a duration of thermal-insulating heat treatment in furnace of 3 Min.
4 Fabrication of stainless steel auger braid gas shielded welding material: A single core wire will be placed on the central shaft and a stranding machine will be used to uniformly distribute 9 steel tendons on the external surface of core wire in the axial direction. After such stranding is finished, the high-heat treatment will be conducted for grease removal at 800°C, with a duration of thermal insulation of 2 minutes. Then water cooling will be performed and drying will be conducted in a drying furnace at 200°C.

Comparison between the stainless steel auger braid gas shielded welding material and the existing gas shielded welding wire:

The diameter of the stainless steel auger braid gas shielded welding material is 2.0mm. Based on the same type of welding groove, the comparison between the welding process with the normal amount of heat inputs and the welding process of the existing gas shielded welding with the relatively low amount of heat inputs is shown as follows:

| Diameter of welding wire mm | Electric current (A) | Voltage (V) | Velocity of wire feed (cm/min) | Amount of heat inputs (KJ) |
|---|---|---|---|---|
| Existing gas shielded welding wire ø1.2 | 200 | 24 | 35 | 8.23 |
| Stainless steel auger braid gas shielded welding material ø2.0 | 260 | 26 | 50 | 8.11 |

The diameter of the existing solid-core gas shielded welding wire is large and the rigidity is too high. So the performance of wire feed is bad. Generally, the diameter of gas shielded welding wire actually used is 1.2mm, while the diameter of the auger braid gas shielded welding wire can be up to 2.0mm. The stainless steel auger braid gas shielded welding material obtained from this design scheme is used for its proper rigidity, good toughness and good performance of wire feed. So it is particularly suitable for socket welding and fillet welding requiring a large filling volume of deposited metal. For these two welding materials, the welding speed is 40% or faster than that of the existing gas shielded welding wire based on the almost identical amount of heat input. Calculated at the sectional area of welding material, the filling volume of one-time deposited metal of stainless steel auger braid welding material with a diameter of 2.0 is about 2.8 times the solid-core welding wire with a diameter of 1.2. In terms of the high welding speed and the large filling volume, the huge advantages of the stainless steel auger braid welding material can be fully reflected.

The friction factor of external surface of the stainless steel auger braid welding material is large. The wire feed is accurate without slipping, and a certain level of rigidity and stability is provided. So such material is particularly suitable for robot welding.

### Reference numbers

- 1: core wire
- 2: steel tendons
- 3: fine wires

## Claims

1. The stainless steel auger braid welding material is **characterized in that** it contains core wires and several steel tendons (2), wherein,
the said welding wire is of a round-bar shape;
the said steel tendons (2) are wrapped on the external surface of the said core wire along the axial line and stranded around the circumference of the said core wire, and each steel tendon shall be stranded by winding several fine wires (3).

2. The stainless steel auger braid welding material of claim 1, wherein the number of the said steel tendons (2) is 5-20, each of which contains 3-15 fine wires (3).

3. The stainless steel auger braid welding material of claim 1 or 2, wherein the diameter of the said core wire is 1/4-1/2 of the overall diameter of welding material.

4. The stainless steel auger braid welding material of one of claims 1 to 3, wherein the billet of the said core wire is made of stainless steel bundle wire.

5. The stainless steel auger braid welding material of one of claims 1 to 4, wherein the diameter of the said fine wire 0.05∼0.8mm.

6. The manufacturing method of the stainless steel auger braid welding material of one of claims 1 to 5 is **characterized in that** the following steps are involved:
step 1 fabrication of fine wires (3): the billet is made of stainless steel bundle wires which will be drawn many times, and after such drawing is completed, annealing will be performed to get fine wires (3);
step 2 fabrication of steel tendons (2): the fine wires (3) obtained in step 1 will be stranded with a stranding machine and the high-heat treatment of on-line removal of grease will be performed after such stranding is finished;
step 3 fabrication of core wires: the billet is made of stainless steel bundle wires which will be drawn many times, and after such drawing is completed, annealing will be performed to get core wires;
step 4 fabrication of stainless steel auger braid welding material: the steel tendons (2) obtained in step 2 will be uniformly wrapped on the external surface of core wire produced in step 3 and a stranding machine will be adopted to strand the aforementioned steel tendons (2) around the circumference of core wire, and after such stranding is completed, the high-heat treatment is carried out for grease removal to get the said stainless steel auger braid welding material.

7. The manufacturing method of the stainless steel auger braid welding material of claim 6, wherein the temperature of annealing for fine wires (3) is between 600°C and 1200°C in step 1, during heat treatment, the furnace is filled with protective gas and a duration of heat treatment is 2-4 Min.

8. The manufacturing method of the stainless steel auger braid welding material of claim 6 or 7, wherein the temperature of high-heat treatment for on-line removal of grease from steel tendons (2) is between 600°C and 1200°C in step 2, during heat treatment, the furnace is filled with protective gas and a duration of heat treatment is 2-4 Min.

9. The manufacturing method of the stainless steel auger braid welding material of one of claims 6 to 8, wherein the temperature of annealing for core wires is between 600°C and 1200°C in step 3, during heat treatment, the furnace is filled with protective gas and a duration of heat treatment is 2-4 Min.

10. The manufacturing method of the stainless steel auger braid welding material of one of claims 6 to 9herein the temperature of high-heat treatment for on-line removal of grease from the stainless steel auger braid welding material obtained is between 600°C and 1200°C in step 4, during heat treatment, the furnace is filled with protective gas and a duration of heat treatment is 2-4 Min, after the heat treatment is completed, discharging and water cooling are performed, and after water cooling is finished, the drying furnace is employed for drying at a temperature of 100∼300°C.
